# NEW EUROPEAN PATENT SPECIFICATION

(11) **EP 1 312 769 B2**
(45) Date of publication and mention of the opposition decision: **17.10.2007**
(45) Mention of the grant of the patent: 14.07.2004
(21) Application number: 03000133.3
(22) Date of filing: 06.08.1998
(51) Int. Cl.: F01D 25/16, F01D 25/18, F02C 6/12, F04D 29/26, F04D 29/28

(54) **Turbocharger**
Abgasturbolader
Turbocompresseur

(30) Priority: 06.08.1997 US 54908 P; 09.07.1998 US 112517
(43) Date of publication of application: 21.05.2003
(62) Divisional of application: 98939256.8
(73) Proprietor: Honeywell International Inc., Morristown, New Jersey 07962-2245 (US)
(72) Inventor: AGUILAR, Scott, Grover, CA 91214 (US); ELPERN, David, George, CA 90005 (US); HEBBEN, Peter, John, CA 90505 (US); JENSEN, Lloyd Bill, CA 92314-9180 (US); COLEMAN, Steven, Walter, CA 90630 (US); SAHAY, Sunhil Nandan, CA 90274 (US); MILLIKEN, Douglas, Alan, CA 91362 (US); LOPEZ, Raymond, Leo, CA 92708 (US); WICK, Werner, CA 90505 (US)
(74) Representative: Freeman, Jacqueline Carol

(56) References cited:
- EP-A- 0 138 516
- EP-A- 0 429 656
- EP-A- 0 834 645
- DE-U- 29 702 119
- JP-A- 56 102 543
- US-A- 3 961 867
- US-A- 4 986 733
- US-A- 5 209 595

## Description

### BACKGROUND OF THE INVENTION

This invention relates generally to turbochargers. More particularly, the invention provides a compressor wheel for a turbocharger.

Exhaust gas driven turbochargers include a rotating shaft carrying turbine wheel and a compressor wheel, which is rotatably supported within a center housing by oil lubricated bearings. The turbine wheel is driven by the exhaust gas at high rotational speeds, often in excess of 100,000 RPM, to drive the compressor wheel to provide boosted charge air for use by an internal combustion engine. Axial motion of the shaft and wheels must be resisted by the bearing system and rotational dynamics of the rotor group accommodated and damped by journal actio of the bearing system.

Typically the compressor wheel is attached to the turbine wheel by a shaft.

According to the present invention there is provided a compressor for a turbocharger comprising a wheel having a hub and a thrust surface at one side of the wheel and having a bore extending through the wheel from the thrust surface to a nose of the wheel at the opposite side of the wheel, characterised by a threaded portion, for attachment to a shaft, being located in the bore of the nose at said opposite side of the wheel.

The details and features of the present invention will be more clearly understood with respect to the detailed description and drawings in which:
FIG.1a is a side section view of a turbocharger incorporating a compressor wheel according to one embodiment of the invention.
FIG.1b is a side section view of a turbocharger incorporating a compressor wheel according to a second embodiment of the invention.
FIG. 2 is a section view of a compressor wheel for a turbocharger showing details of the invention.
FIG. 3 is a close up view detail of the area labelled 7 in FIG. 2.

### DETAILED DESCRIPTION OF THE INVENTION

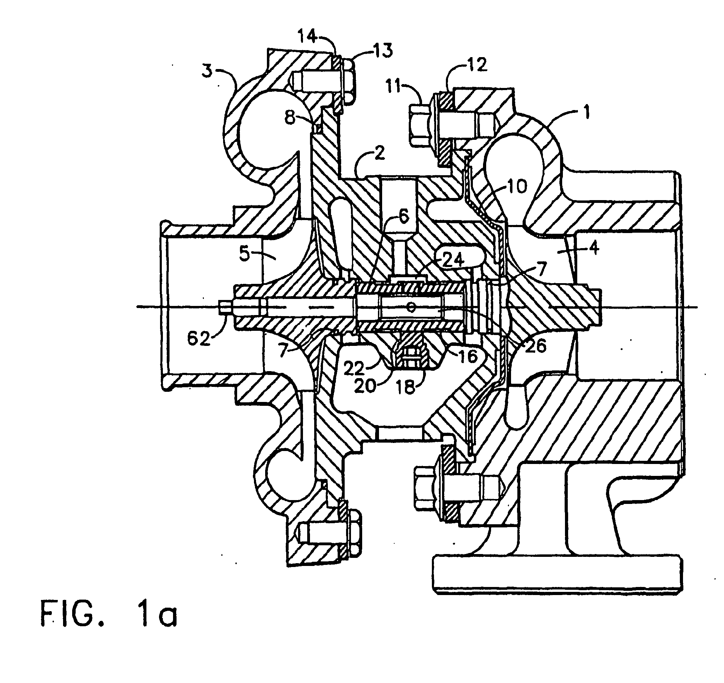

Referring to the drawings, a turbocharger is shown in FIG. 1a. A turbine housing 1, center housing 2 and compressor housing 3 form the case of the turbocharger. A turbine wheel and shaft assembly 4 are attached to a compressor wheel 5, with the shaft rotationally supported in a bearing 6 carried in the center housing. Piston ring seals 7 on the turbine wheel and compressor wheel hibs prevent lubrication oil leakage from the center housing into the turbine or compressor housings. A compression ring 8 enhances the sealing attachment of the compressor housing to the center housing. A shroud 10 is engaged between the turbine housing and center housing extending behind the turbine wheel as a thermal barrier. Bolts 11 extending through washer clamps 12 secure the turbine housing to the center housing while bolts 13 and washer clamps 14 secure the compressor housing to the center housing.

Bearing 6 is constrained from rotating in the bearing case bore 16 of the center housing by a pin 18 inserted through an aperture 20 in boss 22. The bearing is semi-floating with symmetrical freedom of movement from end to end due to the centrally located pin thereby optimizing the effectiveness of the oil-film damper in the clearance between the bearing outer diameter and case bore. Lubrication for the bearing is supplied through an inlet 24. The shaft extending though the bearing includes a relieved portion 26 promoting oil flow between the shaft and bearing.

One thrust surface of the bearing engages a thrust runner on the turbine wheel hub as shown in FIGs, 1a and b.

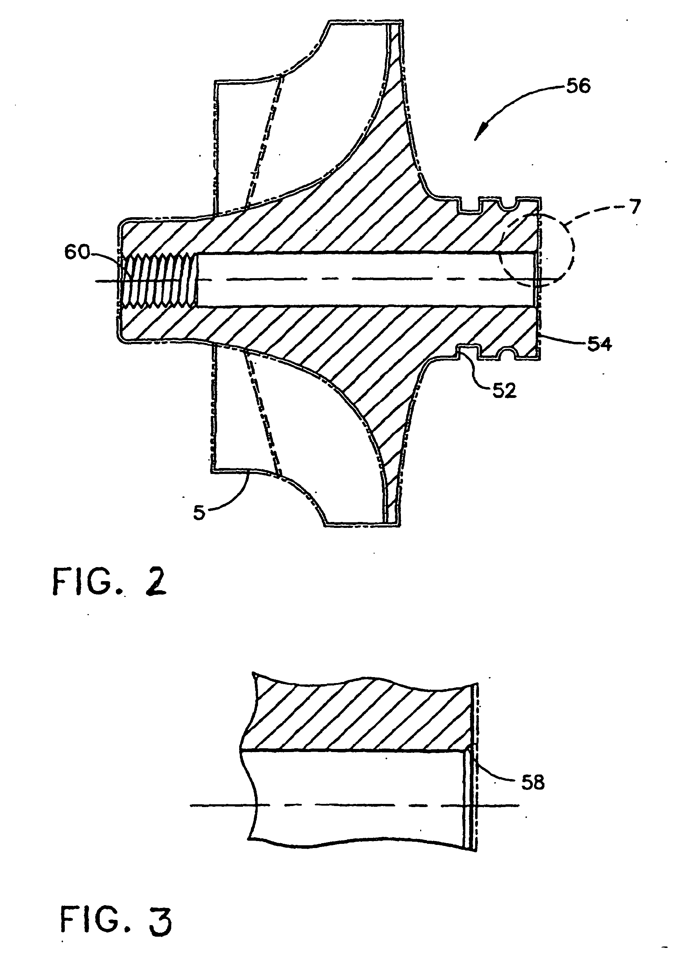

A compressor wheel is shown in detail in FIG. 2. The wheel 5 includes a seal ring groove 52 and a thrust surface 54 integrated into the hub 56. Directly incorporating the thrust surface on the wheel hub reduces the number of mating surfaces improving normality and ease of balancing as well as improving heat transfer from the thrust surfaces. For the embodiment shown, a hard anodize on the compressor wheel is employed to improve thrust and seal ring wear on the hub. Nituff coating produced by Nimet Industries, Inc, 2424 N. Foundation Drive, South Blend, Indiana has been found to provide a suitable surface. For ease of processing the outer surfaces of the wheel are coated, however, the shaft bore is uncoated. As shown in FIG.3, a chamfer 58 on the bore exit to the thrust surface is employed for transition of the coating to avoid positive projection of coating build up on the thrust surface due to masking of the bore during processing.

The compressor wheel employed incorporated a threaded portion 60 at the nose of the bore for attachment to shaft 62 which minimizes overhung weight on the bearing. In addition, an overall reduction in overhang distance from the bearing journal to the center of mass of the wheel is provided by the design of the bearing system incorporating present invention. Reduced overhang reduces compressor-end deflection and improves the relative location of the bearing damper.

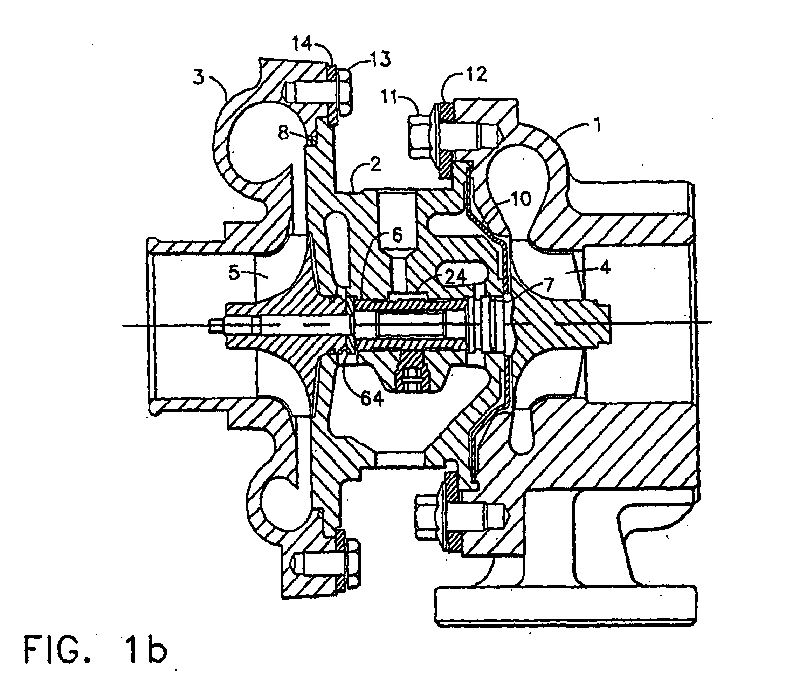

In FIG. 1b a thrust washer 64 is included between the bearing thrust surface and the compressor wheel hub. The washer accommodates thrust loads with higher wear tolerance. Use of a washer as opposed to a conventional thrust collar provides a simple fabrication geometry where required surface finish and parallelism are more easily maintained.

## Claims

1. A compressor for a turbocharger comprising a wheel (5)having a hub (56) and a thrust surface (54) at one side of the wheel (5) and having a bore extending through the wheel (5) from the thrust surface (54) to a nose of the wheel (5) at the opposite side of the wheel, **characterised by** a threaded portion (60), for attachment to a shaft (62), being located in the bore of the nose at said opposite side of the wheel (5).

2. A compressor according to claim 1 wherein the wheel (5) incorporates an integral hub (56) having an integral thrust surface (54).

3. A compressor according to claim 2 comprising an anodized coating on the hub thrust surface(54).

4. A compressor according to claim 3 wherein the anodized coating is Nituff.

5. A compressor according to claim 1 comprising a thrust washer on an end surface of the hub of the compressor wheel (5) engaging an adjacent thrust surface (28) of a bearing (6).

## Patentansprüche

1. Verdichter für einen Abgasturbolader, der ein Rad (5) mit einer Nabe (56) und einer Druckfläche (54) auf einer Seite des Rads (5) und mit einer sich von der Druckfläche (54) zu einer Nase des Rads (5) auf der gegenüberliegenden Seite des Rads (5) durch dieses erstreckenden Bohrung umfasst, **gekennzeichnet durch** einen Gewindeabschnitt (60) zur Befestigung an einer Welle (62), der in der Bohrung der Nase auf der gegenüberliegenden Seite des Rads (5) angeordnet ist.

2. Verdichter nach Anspruch 1, bei dem das Rad (5) eine integrale Nabe (56) mit einer integralen Druckfläche (54) beinhaltet.

3. Verdichter nach Anspruch 2, der eine Eloxalbeschichtung auf der Nabendruckfläche (54) umfasst.

4. Verdichter nach Anspruch 3, bei dem es sich bei der Eloxalbeschichtung um Nituff handelt.

5. Verdichter nach Anspruch 1, der eine Anlaufscheibe an einer Endfläche der Nabe des Verdichterrads (5) umfasst, die in eine angrenzende Druckfläche (28) eines Lagers (6) eingreift.

## Revendications

1. Compresseur pour un turbocompresseur comprenant une roue (5) dotée d'un moyeu (56) et d'une surface de butée (54) d'un côté de la roue (5) et dotée d'un alésage s'étendant à travers la roue (5) de la surface de butée (54) à un nez de la roue (5) du côté opposé, **caractérisé en ce qu'**une partie filetée (60), destinée à être fixée à un arbre (62), est située dans l'alésage du nez au niveau dudit côté opposé de la roue (5).

2. Compresseur selon la revendication 1 dans lequel la roue (5) comprend un moyeu intégré (56) ayant une surface de butée intégrée (54).

3. Compresseur selon la revendication 2 comprenant un revêtement anodisé sur la surface de butée (54) du moyeu.

4. Compresseur selon la revendication 3 dans lequel le revêtement anodisé est en Nituff.

5. Compresseur selon la revendication 1 comprenant une rondelle de butée sur une surface d'extrémité du moyeu de la roue (5) de compresseur en engagement avec une surface de butée adjacente (28) d'un palier (6).
